(19) Europäisches Patentamt
European Patent Office
Office européen des brevets

(11) Veröffentlichungsnummer: **0 090 285 B1**

(12) **EUROPÄISCHE PATENTSCHRIFT**

(45) Veröffentlichungstag der Patentschrift: **16.01.85**

(51) Int. Cl.⁴: **C 09 B 67/22**, C 09 B 67/20, C 09 C 1/00, C 09 D 11/02

(21) Anmeldenummer: **83102674.5**

(22) Anmeldetag: **18.03.83**

# (54) Pigmentzubereitungen und deren Verwendung zum Pigmentieren von Tiefdruck- und Lackfarben.

(30) Priorität: **26.03.82 DE 3211165**

(43) Veröffentlichungstag der Anmeldung: **05.10.83 Patentblatt 83/40**

(45) Bekanntmachung des Hinweises auf die Patenterteilung: **16.01.85 Patentblatt 85/3**

(84) Benannte Vertragsstaaten: **CH DE FR GB IT LI**

(56) Entgegenhaltungen:
**EP - A - 0 014 907**
**US - A - 3 772 048**

(73) Patentinhaber: **BASF Aktiengesellschaft, Carl-Bosch-Strasse 38, D-6700 Ludwigshafen (DE)**

(72) Erfinder: **Fechner, Wolf Dieter, Raiffeisenstrasse 22, D-6716 Dirmstein (DE)**
Erfinder: **Polster, Rudolf, Dr., Carostrasse 43, D-6710 Frankenthal (DE)**
Erfinder: **Kranz, Joachim, Rheinrugenstrasse 22, D-6700 Ludwigshafen (DE)**
Erfinder: **Hartmann, Eduard, Neuhofener Strasse 77, D-6703 Limburgerhof (DE)**

EP 0 090 285 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Zum Pigmentieren von Tiefdruck- und Lackfarben werden in steigendem Masse Kupferphthalocyaninpigmente und Eisenhexacyanoferrat(III)-pigmente, wie Miloriblau (CI Pigment Blue 27; CI Nr. 77510) gemeinsam verwendet, wozu beide Pigmente wegen ihres unterschiedlichen Dispergierverhaltens getrennt im Lösungsmittel(gemisch) oder in Bindemittellösungen angerieben werden. Da Miloriblau schwer dispergierbar ist, wird zum Anreiben dieses Pigments besonders viel Energie zum Anreiben (Dispergieren) benötigt.

Aufgabe der vorliegenden Erfindung war es, Zubereitungen zu entwickeln, die feinteiliges Kupferphthalocyanin und Pigment Blue 27, CI Nr. 77510, enthalten und die sich in Lösungen von Bindemitteln für Tiefdruck- und Lackfarben leicht und vollständig dispergieren lassen.

Es wurde gefunden, dass eine leicht dispergierbare Zubereitung von a) feinteiligem Kupferphthalocyanin, das bis zu 2 Chloratome im Molekül enthalten kann, und b) einem Eisenhexacyanoferrat(III)pigment vorliegt, wenn die Zubereitungen durch intensives Mahlen eines Gemisches aus Kupferphthalocyanin und b hergestellt wird.

Die mit der erfindungsgemässen Zubereitung pigmentierten Tiefdruckfarben zeigen im Vergleich zu einer Tiefdruckfarbe, die aus den im gleichen Bindemittel getrennt angeriebenen Komponenten a und b hergestellt wurde, neben einer ein wenig erhöhten Farbstärke einen deutlich höheren Glanz der Drucke auf Acetatfolie und auf Aluminiumfolie.

Dieses Ergebnis war überraschend, da Eisenhexacyanoferrat(III)pigmente, z.B. Miloriblau, durch intensives Mahlen, z.B. durch Mahlen in einer Kugelmühle, in Abwesenheit von Mahlhilfsmitteln geschädigt wird.

Die neuen Zubereitungen können a und b in einem Verhältnis von a:b wie 1:6 bis 9:1 Gew.-Teilen enthalten. Bevorzugt sind Zubereitungen mit einem Gewichtsverhältnis von a:b von 1:5 bis 6:1, insbesondere solche von 1:2 bis 2:1.

Die Zubereitungen werden durch intensives Mahlen von Gemischen aus Kupferphthalocyanin und dem Eisenhexacyanoferrat(III)pigment erhalten. Das Mahlen kann in Kugelmühlen oder ähnlich wirkenden Mühlen wie Schwingmühlen oder Planetenkugelmühlen erfolgen. Für die technische Herstellung der Zubereitungen kommen vorzugsweise Kugelmühlen oder Schwingmühlen in Betracht.

Die Mahldauer hängt von der Teilchengrösse der verwendeten Ausgangsstoffe ab und kann zwischen 5 und 25 h liegen. In der Regel ist eine Mahldauer von 10 bis 18 h ausreichend. Das Mahlgut kann direkt ohne weitere Behandlung zum Pigmentieren verwendet werden.

Für a kommen nach beliebigen Verfahren hergestellte Kupferphthalocyanine (CuPc) der α-, β-, γ-, δ- und ε-Modifikation in Betracht, die bis zu 2 Chloratome im Molekül enthalten können (CI Pigment Blue; CI Nr. 74160). Wegen des intensiven Mahlens können beim Mahlvorgang Modifikationsumwandlungen erfolgen. Da das Gemisch aus a und b intensiv gemahlen werden muss, wird das CuPc vorzugsweise in Form von rohem CuPc angewendet.

Als b kommen Eisenhexacyanoferrat(III)-pigmente CI Blue 27, CI Nr. 77510 in Betracht, die z.B. unter dem Namen Miloriblau, Preussischblau, Berliner Blau, Eisenblau im Handel sind.

Für die Komponente b sind Eisenhexacyanoferrat(III)pigmente vom Typ des Miloriblaus bevorzugt.

Die Zubereitungen gemäss der vorliegenden Erfindung können durch Einarbeiten von speziellen Mitteln in ihren coloristischen und/oder anwendungstechnischen Eigenschaften noch weiter verbessert werden. Als solche Mittel kommen in Betracht:

1. Verbindungen, die durch Mannich-Kondensation aus 2-Hydroxynaphthalin, das gegebenenfalls noch eine oder zwei weitere β-ständige Hydroxygruppen enthält, Formaldehyd und primären oder sekundären, aliphatischen, cycloaliphatischen oder aromatischen Mono-, Di-, Tri- oder Polyaminen oder 5- oder 6gliedrigen heterocyclischen Verbindungen, die eine NH-Gruppe als Ringglied aufweisen, erhalten werden und die 1 bis 6 β-Hydroxynaphthylgruppen enthalten (Komponente c).

2. Verbindungen der allgemeinen Formel

$$K\text{-}(NH-CO-NH-R)_2 \qquad (I)$$

in der R $C_{12}$- bis $C_{18}$-Alkyl, $C_{12}$- bis $C_{18}$-Alkenyl, $C_8$- bis $C_{18}$-Alkoxypropyl oder

$$-(CH_2)_3-O-(C_2H_4O)_n-O-R^1,$$

worin $R^1$ für $C_2$- bis $C_8$-Alkyl oder Phenyl und n für 1, 2, 3 oder 4 stehen und K 1,5-Naphthylen oder 4,4'-Diphenylenmethan bedeuten (Komponente d).

3. $C_6$- bis $C_{18}$-Alkylbenzolsulfolsäuren, die gegebenenfalls im Phenylkern Hydroxylgruppen tragen (Komponente e).

4. Ein Gemisch aus e und einem basischen Kupferphthalocyanin der Formel

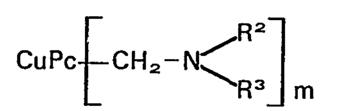

(II)

in der CuPc ein m-wertiger Rest des Kupferphthalocyanins, $R^2$ und $R^3$ unabhängig voneinander Wasserstoff oder $C_1$- bis $C_8$-Alkyl und m 1, 2, 3 oder 4 bedeuten und wobei das Verhältnis von e zu II 0,8:1 bis 1:0,8 Gew.-Teile beträgt (Komponente f).

5. Salze, die durch Umsetzen von e mit basischen Kupferphthalocyaninen der Formel II erhalten werden (Komponente g).

Als Komponenten c, d, e, f und g kommen in Betracht:

Die Komponenten c werden durch Mannich-Kondensation aus 2-Hydroxynaphthalin, das gegebenenfalls noch eine oder zwei weitere β-ständige Hydroxygruppen enthält, Formaldehyd und

primären oder sekundären aliphatischen, cycloaliphatischen oder aromatischen Mono-, Di-, Tri- oder Polyaminen oder 5- oder 6gliedrigen heterocyclischen Verbindungen, die eine >NH-Gruppe als Ringglied aufweisen, hergestellt und enthalten 1 bis 6 β-Hydroxynaphthylgruppen.

Als 2-Hydroxynaphthaline kommen zur Herstellung von c neben 2-Hydroxynaphthalin 2,7-Dihydroxynaphthalin und 2,3-Dihydroxynaphthalin in Betracht. Bevorzugt sind Kondensationsprodukte auf der Basis von 2-Hydroxynaphthalin und 2,7-Dihydroxynaphthalin.

Als zur Herstellung von c geeignete primäre und sekundäre Amine sind z.B. zu nennen: primäre und sekundäre, aliphatische und cycloaliphatische Monoamine, $C_2$- und $C_3$- Alkylendiamine, Di-$C_2$- und $C_3$-alkylentriamine und Poly-($C_2$- und $C_3$-alkylen)polyamine, cycloaliphatische Diamine, aromatische Diamine und 5- oder 6gliedrige gesättigte oder ungesättigte heterocyclische Verbindungen, die eine >NH-Gruppe als Ringglied enthalten. Die Verbindungen c sind bekannt oder werden in bekannter Weise hergestellt (Houben-Weyl, „Methoden der organischen Chemie", 4. Aufl., Bd. XI, S. 731 ff. [1957], Georg Thieme Verlag, Stuttgart).

Vorzugsweise werden als c Verbindungen der allgemeinen Formel

$$R^4-CH_2-X \qquad (III)$$

verwendet, in der $R^4$ für 2-Hydroxynaphthyl-1, das gegebenenfalls noch eine oder zwei weitere β-ständige Hydroxylgruppen trägt, oder für

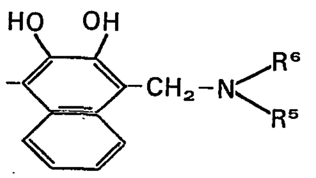

und X für einen Rest der Formel

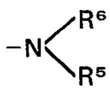 oder 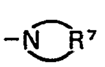

stehen, worin $R^6$ und $R^5$ je einen aliphatischen oder phenylaliphatischen Rest, wobei $R^6$ und $R^5$ gleich oder verschieden sein können, oder $R^5$ eine Gruppe der Formel $-CH_2-R^4$ und $R^6$ eine Gruppe der Formel

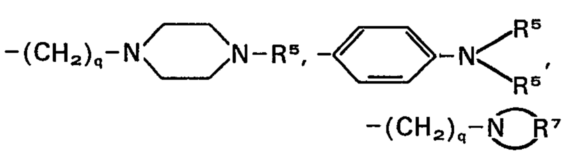

oder

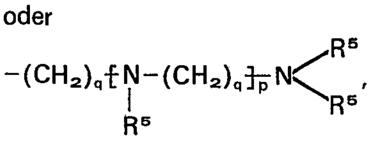

q 2 oder 3, p 0, 1 oder 2, $-N$ $R^7$ einen gesättigten oder ungesättigten 5- oder 6gliedrigen heterocyclischen Ring, der gegebenenfalls $-O-$ oder $>N-R^8$ als weitere Ringglieder und/oder eine oder zwei $>C=O$-Gruppen enthält, und $R^8$ $C_1$- bis $C_4$-Alkyl bedeuten.

Für $R^6$ und $R^5$ sind als aliphatische und phenylaliphatische Reste z.B. zu nennen:

1. $C_1$- bis $C_5$-Alkyl, wie Methyl, Ethyl, Propyl, n- oder Isobutyl, Pentyl.
2. $C_1$- bis $C_8$-Alkoxy-$C_2$- und $C_3$-alkyl wie 2-Methoxyethyl, 3-Methoxypropyl, 2-Ethoxyethyl, 3-Ethoxypropyl, 2-n-Butoxyethyl, 3-n-Butoxyethyl, 2-(2'-Ethylhexoxy)ethyl, 3-(2'-Ethylhexoxy)propyl.
3. Alkoxyalkoxy-$C_2$- und $C_3$-alkyl mit 3 bis 11 C-Atomen im Alkoxyalkoxy, 2-Methoxy-2-ethoxyethyl, 2'-Methoxy-3-ethoxypropyl, 3'-Methoxy-3-propoxypropyl, 2'-Ethoxy-2-ethoxyethyl, 2'-Ethoxy-3-ethoxypropyl, 3'-Ethoxy-3-propoxypropyl, 2'-Propoxy-2-ethoxyethyl, 2'-Propoxy-3-ethoxypropyl, 3'-Propoxy-3-propoxypropyl, 2'-Butoxy-2-ethoxyethyl, 2'-Butoxy-3-ethoxypropyl, 3'-Butoxy-3-propoxypropyl, 3'-(2"-Ethylhexoxy)-3-propoxypropyl.
4. Hydroxy-$C_2$- bis $C_3$-alkyl wie 2-Hydroxyethyl, 2- oder 3-Hydroxypropyl.
5. N,N-Di-$C_1$- bis $C_4$-alkylamino-$C_2$- bis $C_3$-alkyl wie 2-(N,N-Dimethylamino)ethyl, 3-(N,N-Dimethylamino)propyl, 2-(N,N-Diethylamino)-ethyl, 2-(N,N-Dibutylamino)ethyl, 3-(N,N-Diethylamino)propyl, 3-(N,N-Dibutylamino)propyl.
6. Phenyl-$C_1$- bis $C_4$-alkyl wie Benzyl, 2-Phenylethyl, 2- und 3-Phenylpropyl.
7. $-C_2H_4-N$ $R^7$ und $-C_3H_6-N$ $R^7$, worin $-N$ $R^7$ einen 5- oder 6gliedrigen gesättigten oder ungesättigten heterocyclischen Ring, der gegebenenfalls $-O-$ oder $>N-R^8$ als weitere Ringglieder und/oder eine oder zwei $>CO$-Gruppen aufweist und $R^8$ $C_1$- bis $C_4$-Alkyl bedeutet.

Als heterocyclische Reste kommen für $-N$ $R^7$ z.B. solche in Betracht, die sich vom Morpholin, Piperidin, Pyrrolidon, Pyrrolidin, Pyrazol, N'-$C_1$- bis $C_4$-Alkylpiperazin oder von Phthalimid ableiten.

Von den Verbindungen der Formel II sind solche bevorzugt, in denen $R^4$ für 2,7-Dihydroxynaphthyl-1 und 2-Hydroxynaphthyl-1 steht.

Von diesen Verbindungen der Formel III sind solche besonders bevorzugt, bei denen $R^4$ und $R^6$ die oben unter 1 bis 7 angegebene Bedeutung haben. Weiterhin sind Verbindungen der Formel III besonders bevorzugt, bei denen $R^4$ = 2-Hydroxynaphthyl-1, 2,7-Dihydroxynaphthyl und

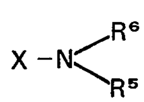

ist, wobei $R^5$ für den Rest $-CH_2-R^4$ und $R^6$ für Reste der Formeln

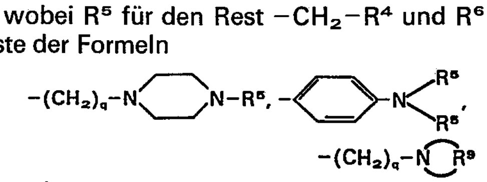

oder

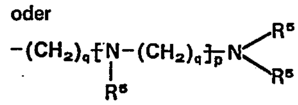

stehen, worin q=2 oder 3, p=0, 1 oder 2 sind und 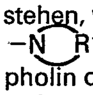 einen Rest bedeutet, der sich vom Morpholin oder Piperidin ableitet.

Ganz besonders bevorzugt sind aus wirtschaftlichen Gründen für c Verbindungen der Formeln IVa und IVb

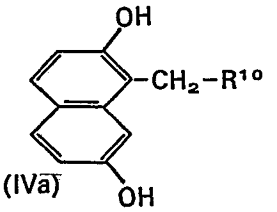
(IVa)

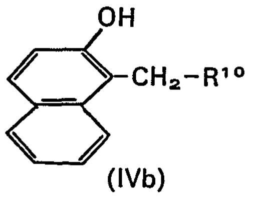
(IVb)

in denen $R^{10}$ für N-Morpholinyl, N-Piperidinyl, N-Pyrrolidonyl, N-Pyrazolyl-, N-Phthalimido, N-(N'-Methylpyrazinyl) oder N-(N'-Ethylpyrazinyl) oder für Di-$C_1$- bis $C_4$- alkylamino wie Dimethylamino, Diethylamino, Dipropylamino oder Dibutylamino, Di-$C_1$- bis $C_4$-alkoxy-$C_2$- oder $C_3$-alkylamino wie Di-(2-methoxyethyl)amino, Di-(2-ethoxyethyl)amino, Di-(2-propoxyethyl)-amino, Di-(2-butoxyethyl)amino, Di-(3-methoxypropyl)amino, Di-(3-ethoxypropyl)amino, Di-(3-butoxypropyl)amino, Di-(2-hydroxyethylamino), Dibenzylamino steht.

Die für die Komponenten d in Betracht kommenden Bisharnstoffe der Formel I sind bekannt (EP-A Nr. 14907).

Von den Verbindungen sind für d solche bevorzugt, bei denen K der 1,5-Naphthylenrest und R für

1. $C_{13}$- bis $C_{18}$-Alkyl und Alkenyl, wie Tridecyl, Tetradecyl, Hexadecyl, Octadecyl, Oleyl,

2. $C_8$- bis $C_{18}$-Alkoxypropyl wie 3-(2'-Ethylhexoxy)propyl, 3-(n-Octoxy)propyl, 3-Nonoxypropyl, 3-Decoxypropyl, 3-Undecoxypropyl, 3-Dodecoxypropyl, 3-Pentadecoxypropyl, 3-Hexadecoxypropyl, 3-Octadecoxypropyl, 3-($C_9$-/$C_{11}$-Alkoxy)propyl, 3-($C_{12}$-/$C_{14}$-Alkoxy)propyl und 3-($C_{16}$-/$C_{19}$-Alkoxy)-propyl, oder

3. $-(CH_2)_3-O-(CH_2-CH_2O)_n-R^1$ mit n=2 oder 3 und $R^1$ = Ethyl, n-Propyl, n-Butyl oder Phenyl steht.

Wegen der hohen Wirkung auf die Zubereitungen sind für d solche Verbindungen der Formel I besonders bevorzugt, in der K für den 1,5-Naphthylenrest und R für Tridecyl oder 3-(2'-Ethylhexoxy)propyl stehen, von denen das letztere wegen seiner besonders grossen Wirkung ganz besonders bevorzugt ist.

Als Komponente e sind als gegebenenfalls im Phenylrest Hydroxygruppen tragende $C_6$- bis $C_{18}$-Alkylbenzolsulfonsäuren z.B. zu nennen, wobei das Alkyl linear oder verzweigt sein kann: 4-Octylbenzolsulfon, 4-Nonylbenzolsulfon, 4-Decylbenzolsulfon, 4-Hexadecylbenzolsulfon, 4-Octadecylbenzolsulfon, die entsprechenden Alkylphenolsulfonsäuren oder Gemische dieser Säuren. Bevorzugt ist Dodecylbenzolsulfonsäure.

Als Komponente f kommen Gemische aus den unter e genannten Alkylbenzolsulfonsäuren und basischen CuPc-Verbindungen der Formel II in Betracht. Die Verbindungen der Formel II sind bekannt. Bevorzugt sind für II solche, bei denen mindestens einer der Reste $R^2$ oder $R^3$ Ethyl, Propyl oder Butyl und m im Mittel 2,5 bis 4 ist. In der Regel liegt II in Form eines Gemisches aus Verbindungen mit m=2, 3 oder 4 vor. Das Verhältnis von Sulfonsäure zu basischem CuPc beträgt im allgemeinen 0,8:1 bis 1:0,8, insbesondere 1:1 Gew.-Teile.

Anstelle der Komponente f können auch Salze g verwendet werden, die durch Umsetzen stöchiometrischer Mengen an e mit basischen CuPc II erhalten werden. Das Gewichtsverhältnis von e zu II liegt je nach der verwendeten Sulfonsäure und der Zahl der basischen Gruppen in II in der Regel zwischen 0,8:1 bis 1:0,8, vorzugsweise bei 1:1 Gewichtsteilen.

Die Zubereitungen gemäss der vorliegenden Erfindung können eine oder mehrere der unter 1 bis 5 genannten Komponenten c bis g enthalten. Bezogen auf die Pigmente a+b können die Zubereitungen je bis zu 7 Gew.-% der Komponenten c, d und/oder e und/oder je bis zu 15 Gew.-% an f oder g enthalten.

Vorzugsweise liegt der Gehalt an c, e und/oder d bei je 3,5 bis 6,5 Gew.-%, bezogen auf a+b.

Der Anteil an f oder g liegt vorteilhafterweise bei 8 bis 15, insbesondere bei 10 bis 12 Gew.-%, bezogen auf a+b.

Für den Fall, dass die Zubereitungen mehr als 2 der Komponenten c bis g enthalten, ist die Summe dieser Komponenten – bezogen auf a+b – maximal 25 Gew.-%. Vorzugsweise liegt der Anteil der Komponenten c bis g bei 2,5 bis 25, insbesondere bei 4 bis 21 Gew.-%, bezogen auf a+b.

Bevorzugt sind aus coloristischen und anwendungstechnischen Gründen Zubereitungen, die zusätzlich zu den Pigmenten a und b die Komponenten c und d; d und e; c, d und e; c, d und f oder c, d und g enthalten.

Besonders bevorzugt sind Zubereitungen aus a, b, c, d und e.

Die Zubereitungen werden durch Mahlen einer Mischung aus dem Kupferphthalocyanin, dem Eisenhexacyanoferrat(III)pigment und den gewünschten bzw. erforderlichen Komponenten c bis g in einer Kugelmühle erhalten.

Man kann auch so verfahren, dass man die Pigmente zusammen mit c, d und e in der Kugelmühle mahlt und dem Mahlgut die erforderliche Menge an basischem Kupferphthalocyanin II zugibt und homogen mischt.

Die Zubereitungen können auch erhalten werden, wenn man dem Mahlgut aus a und b die gewünschten Komponenten zugibt und das erhaltene Gemisch durch weiteres Mahlen in Kugelmühlen oder ähnlich wirkenden Mühlen homogenisiert.

Das erstgenannte Verfahren zur Herstellung der Zubereitung durch gemeinsames Mahlen der Mischung der Komponenten ist bevorzugt, da die nach diesem Verfahren erhaltenen Zubereitungen die besten coloristischen und anwendungstechnischen Eigenschaften aufweisen.

Die Zubereitungen gemäss der vorliegenden Erfindung haben coloristische und anwendungstechnische Vorteile: 1) die Pigmente sind leicht dispergierbar; 2) die damit hergestellten Druck- und Lackfarben haben für die Verarbeitung günstige Viskositäten; 3) die Pigmente sind gegen Flokkung stabil; 4) die mit den Zubereitungen hergestellten Druckfarben geben wegen der hohen Feinverteilung der Pigmente farbstarke, reine und hochglänzende Drucke, die stark lasierend und sehr transparent sind; 5) instabile Modifikationen des Kupferphthalocyanins werden gegen Modifikationsumwandlung stabilisiert; 6) die Kristallisation des feinteiligen Kupferphthalocyanins wird verhindert oder wesentlich vermindert.

Die Erfindung soll durch die folgenden Ausführungsbeispiele zusätzlich erläutert werden. Die im folgenden angegebenen Teile und Prozentangaben beziehen sich auf das Gewicht. CI Pigment Blue 27; CI Nr. 77510 wird im folgenden als Miloriblau bezeichnet.

Die hergestellten Zubereitungen wurden nach den Angaben unter A) zu Toluoltiefdruckfarben verarbeitet. Die Herstellung von Einbrennlacken ist unter C) angegeben.

Die Prüfung der Toluoltiefdruckfarben ist unter B) und die der Einbrennlacke unter D) angegeben.

A. *Toluoltiefdruckfarbe (Herstellung)*

1. In einem 250 ml Polyethylenbecher wird die dem 12,0-g-Pigment entsprechende Menge der Zubereitung zu 138 g einer 35%igen Lösung eines Druckfarbenbindemittels auf der Basis eines Phenol/Formaldehyd-Kondensationsproduktes gegeben. Nach dem Zugeben von 300 g Glaskugeln (∅ 3 bis 4 mm) wird auf einer Schüttelmühle (® Red-Devil) 5 min geschüttelt. Die Glaskugeln werden von der Farbe abgesiebt (Farbe 1).

2. Die Farbe wird wie unter A. 1. angegeben hergestellt, jedoch wird 30 min auf der Schüttelmühle geschüttelt (Farbe 2).

B. *Toluoltiefdruckfarbe (Prüfung)*

1. *Viskosität der Farbe*

Diese wird durch Messen der Auslaufzeit aus einem DIN-Becher mit einer Düse von 4 mm ∅ bestimmt.

2. *Glanz der Färbungen*

2.1 Der Glanz wird an Färbungen mit Hilfe des Glanzmessgerätes der Fa. Gardener gegen einen Schwarzglasstandard bei einem Winkel von 45° gemessen. Der Glanzwert wird als Glanzwert nach Gardener in Skalenteilen angegeben.

2.2 Die zur Messung verwendeten Färbungen wurden wie folgt hergestellt: Die nach A. 2. erhaltenen Farben wurden mit einer 24 μm Spiralrakel der Fa. Erichson auf Aluminiumfolie und auf Polyethylenfolie abgezogen und die Färbungen an der Luft getrocknet.

3. *Dispergierbarkeit/Dispergierhärte*

Die nach A. 1. und A. 2. erhaltenen Farben 1 und 2 wurden auf Pergamentpapier mit einer Messerrakel aufgetragen und die Farbstärkenunterschiede zwischen der mit der Farbe 1 und der Farbe 2 erhaltenen Färbungen visuell verglichen und beurteilt.

Die Dispergierhärte (DH) ist 0, wenn beide Färbungen die gleiche Farbstärke aufweisen. Die Dispergierbarkeit wird mit den Noten 1 bis 6 beurteilt, wobei Note 1 einen geringen Unterschied und Note 6 einen sehr grossen Farbstärkenunterschied (entsprechend einer hohen Dispergierhärte) kennzeichnet. Eine positive Note kennzeichnet, dass die Farbstärke der mit der Farbe 1 erhaltenen Färbung farbstärker ist als die der Farbe 2. Eine negative Note kennzeichnet, dass die Farbstärke bei längerem Dispergieren zunimmt, d.h. die Farbe 2 ist farbstärker als die Farbe 1.

C. *Einbrennlack (Herstellung)*

1. *Buntlack*

In einem 250 ml Becher (Polyethylen) wird die dem 5-g-Pigment entsprechende Menge der Zubereitung zu 95 g eines Einbrennlackes auf der Basis Alkyd/Melamin-Harz (35%ige Lösung in Xylol) gegeben und nach dem Zufügen von 100 ml Glaskugeln (3 mm ∅) auf einer Schüttelmühle 60 min geschüttelt.

2. *Volltonlack*

5 g Buntlack C. 1. werden mit der gleichen Menge eines Klarlacks auf der Basis Alkyd/Melamin-Harz (35%ige Lösung in Xylol) gemischt.

3. *Weissverschnitt*

4 g Buntlack C. 1. werden mit 12,5 g Weisslack (40%ig an Titandioxid) gemischt.

D. *Einbrennlack (Prüfung der Lackierung)*

1. *Volltonlack*

1.1 Der nach C. 2. erhaltene Volltonlack wird auf Kontrastkarton mit einer 24 μm Spiralrakel abgezogen. Nach dem Ablüften (20 min) wird die Lackierung bei 120° C eingebrannt (15 min).

1.2 Die Lackierung wird visuell nach Glanz, Reinheit des Farbtons und Lasur gegenüber einer Vergleichslackierung beurteilt.

2. *Weissverschnitt/Farbstärke*

2.1 Der nach C. 3. erhaltene Weissverschnitt wurde mit einer 150 μm Spiralrakel auf Karton abgezogen und die Lackierung nach dem Ablüften (20 min) bei 120° C eingebrannt (30 min).

2.2 Die Lackierungen wurden nach dem Cielab-System hinsichtlich der Farbstärke, Farbton H und der Reinheit des Farbtons C farbmetrisch ausgewertet (Dr. Fritz Heinrich; „defazet", *1977*, Nr. 8, S. 318/324). Die Farbstärke wurde als Färbeäquivalent (FAE) auf die Farbstärke des Vergleichs (=100) bezogen.

3. *Weissverschnitt/Dispergierhärte*

Die Dispergierhärte (DH) wird mit Hilfe von zwei Weissverschnittfärbungen bestimmt.

3.1 Weissverschnittfarbe 1 wird nach C. 1. und C. 3. hergestellt, jedoch wird das Pigment oder die Zubereitung zur Herstellung des Buntlackes C. 1. nur 6 min in der Schüttelmühle dispergiert. Weissverschnittfarbe 2 ist der nach C. 3. erhaltene Weissverschnitt.

3.2 Mit den Weissverschnittfarben 1 und 2 werden nach den Angaben unter D. 2.1 Lackierungen hergestellt und eingebrannt.

3.3 Zur Bestimmung der Dispergierhärte werden die nach D. 3.2 erhaltenen Lackierungen wie bei D. 2.2 hinsichtlich der Farbstärke ausgewertet.

Die Dispergierhärte DH wird aus den Farbstärken der Färbungen 1 und 2 nach

$$DH = \left(\frac{F2}{F1} - 1\right) \cdot 100$$

errechnet.

Aus der Formel ergibt sich, dass die Dispergierhärte um so kleiner wird, je geringer der Unterschied in der Farbstärke der mit den Weissverschnittfarben 1 und 2 erhaltenen Färbungen (Lackierungen) ist.

*Beispiel 1*

a) In einer Schwingmühle (Volumen 4 l), die mit 8 kg Stahlkugeln (2,5 cm ⌀) gefüllt ist, wurden 400 g einer Mischung aus Rohkupferphthalocyanin (chlorfrei) und CI Pigment Blue 27; CI Nr. 77510 (Miloriblau) (Verhältnis 2:1 Teile) gegeben und 15 h gemahlen.

b) Mit dem Mahlgut wurden nach A. 1. und A. 2. Toluoltiefdruckfarben hergestellt und die Farben geprüft:

α) in der Viskosität nach B. 1.;

β) in der Farbstärke auf Pergament. Hierzu wurde die nach A. 2. erhaltene Farbe auf Pergament wie unter B. 3. angegeben abgerakelt. Die Farbstärke wurde als Färbeäquivalent FAE angegeben, das auf die Farbstärke der Tiefdruckfarbe des Vergleichs I=100 bezogen wurde. Die Tiefdruckfarbe Vergleich I wurde durch Mischen der getrennt in dem gleichen Bindemittel angeriebenen Komponenten feinteiliges Kupferphthalocyanin a und Miloriblau b hergestellt;

γ) im Glanz auf Polyethylen- und auf Aluminiumfolie nach B. 2.;

δ) in der Dispergierbarkeit nach B. 3.

Die Prüfungsergebnisse sind in der Tabelle Ib zusammengestellt.

*Beispiele 2 bis 24*

a) Die Zubereitung wurde durch Mahlen einer Mischung aus Rohkupferphthalocyanin a, Miloriblau b, der Verbindung der Formel

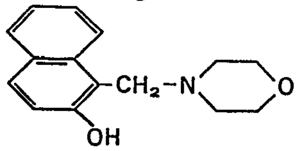

als Komponente c; der Verbindung der Formel

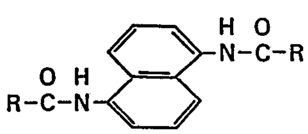

$$R = -\overset{H}{N}\!\!+\!(CH_2)_3-O-CH_2-\overset{C_2H_5}{\overset{|}{C}H}-C_4H_9$$

als Komponente d; Dodecylbenzolsulfonsäure als Komponente e und/oder eines 1:1-Gemisches aus Dodecylbenzolsulfonsäure und dem basischen Kupferphthalocyanin der Formel

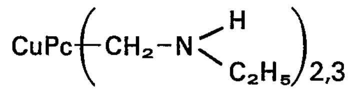

als Komponente f bzw. des Salzes aus Dodecylbenzolsulfonsäure und dem vorstehend angegebenen basischen Kupferphthalocyanin als Komponente g in der in Beispiel 1 angegebenen Weise hergestellt.

Die angewendeten Mengen an a+b, c, d, e, f und/oder g sind in den Tabellen Ia bis IIIa zusammengestellt. In der Spalte 8 der Tabelle ist die Mahldauer angegeben.

b) Mit den erhaltenen Zubereitungen wurden nach A. 1. und A. 2. Toluoltiefdruckfarben hergestellt. Die erhaltenen Farben wurden

α) in der Viskosität nach B. 1.;

β) in der Farbstärke auf Pergament. Hierzu wurde die nach A. 2. erhaltene Farbe auf Pergament wie unter B. 3. angegeben abgerakelt. Die Farbstärke wurde als Färbeäquivalent FAE angegeben, das auf die Farbstärke der Tiefdruckfarbe des Vergleichs I=100 bezogen wurde. Die Tiefdruckfarbe Vergleich I wurde durch Mischen der getrennt in dem gleichen Bindemittel angeriebenen Komponenten feinteiliges Kupferphthalocyanin a und Miloriblau b hergestellt;

γ) im Glanz auf Polyethylen- und auf Aluminiumfolie nach B. 2.;

δ) in der Dispergierbarkeit nach B. 3.

geprüft.

Die Prüfungsergebnisse sind in den Tabellen Ib bis IIIb zusammengestellt.

*Tabellen ⟶*

*Beispiele 25 bis 41*

a) Die Zubereitung wurde durch Mahlen von 88 Teilen einer Mischung aus Rohkupferphthalocyanin a und Miloriblau im Verhältnis 1:2 zusammen mit 3,5 Teilen der in der Tabelle IV angegebenen Komponente c, 3,5 Teilen der Verbindung

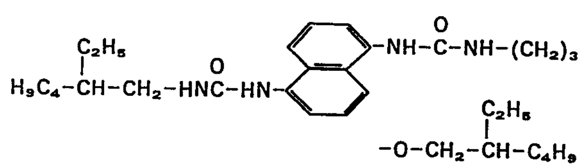

als Komponente d und 5 Teilen Dodecylbenzolsulfonsäure als Komponente e in einer Kugelmühle hergestellt.

b) Mit den nach a erhaltenen Zubereitungen wurden nach A. 1. und A. 2. Toluoltiefdruckfarben hergestellt und die erhaltenen Farben geprüft:

α) in der Viskosität nach B. 1.;

β) in der Farbstärke auf Pergament (vgl. Beispiel 2 b, β);

γ) im Glanz auf Polyethylen- und Aluminiumfolie nach B. 2.;

δ) in der Dispergierbarkeit nach B. 3.

Die Prüfungsergebnisse sind in der Tabelle IV zusammengestellt.

*Tabelle Ia*

| Beispiel | Pigment a:b = 2:1 (T.) | Komponente | | | | | Mahl-dauer (h) |
|---|---|---|---|---|---|---|---|
| | | c (T.) | d (T.) | e (T.) | f (T.) | g (T.) | |
| 1 | 100 | 0 | 0 | 0 | 0 | 0 | 15 |
| 2 | 90 | 5 | 0 | 5 | 0 | 0 | 15 |
| 3 | 90 | 0 | 5 | 5 | 0 | 0 | 15 |
| 4 | 95 | 5 | 0 | 0 | 0 | 0 | 15 |
| 5 | 88 | 3,5 | 3,5 | 5 | 0 | 0 | 15 |
| 6 | 88 | 3,5 | 3,5 | 0 | 5 | 0 | 15 |
| 7 | 83 | 3,5 | 3,5 | 5 | 5 | 0 | 15 |
| 8 | 83 | 3,5 | 3,5 | 5 | 5 | 0 | 5 |
| 9 | 83 | 3,5 | 3,5 | 5 | 5 | 0 | 10 |
| 10 | 83,5 | 3,5 | 3,5 | 0 | 0 | 9,5 | 5 |
| 11 | 83,5 | 3,5 | 3,5 | 0 | 0 | 9,5 | 10 |
| 12 | 83,5 | 3,5 | 3,5 | 0 | 0 | 9,5 | 15 |
| Vergleich I | Druckfarbe wurde durch Mischen von a bzw. b enthaltenden Druckfarben hergestellt | | | | | | |

*Tabelle Ib*
*Prüfungsergebnisse*

| Beispiel | Viskosität DIN-Becher (s) | Farbstärke FAE | Glanz | | Dispergier-barkeit |
|---|---|---|---|---|---|
| | | | PE-Folie | AL-Folie | |
| 1 | 41 | 98 | 98,1 | 114,8 | 0 DH = 0 |
| 2 | 34 | 94 | 101,8 | 116,6 | 0 |
| 3 | 33 | 94 | 103,7 | 129,6 | +1 |
| 4 | 40 | 100 | 100,0 | 114,8 | +1 |
| 5 | 21 | 92 | 101,8 | 120,3 | 0 |
| 6 | 25 | 85 | 83,3 | 103,7 | −4 |
| 7 | 52 | 81 | 107,4 | 131,4 | 0 |
| 8 | 26 | 92 | 101,8 | 127,7 | 0 |
| 9 | 39 | 89 | 103,7 | 127,7 | −2 |
| 10 | 26 | 94 | 100,0 | 111,1 | −1 |
| 11 | 46 | 80 | 103,7 | 120,3 | −2 |
| 12 | 48 | 87 | 107,4 | 133,3 | −4 |
| Vergleich I | 39 | 100 | 87,0 | 103,7 | −4 |

*Tabelle IIa*

| Beispiel | Pigment a:b (T.) | Komponente | | | | | Mahl-dauer (h) |
|---|---|---|---|---|---|---|---|
| | | c (T.) | d (T.) | e (T.) | f (T.) | g (T.) | |
| 13<br>Vergleich II | 4:1<br>88<br>1 | 3,5 | 3,5 | 5 | 0 | 0 | 15 |
| 14<br>Vergleich III | 1:1<br>88<br>1 | 3,5 | 3,5 | 5 | 0 | 0 | 15 |
| 15<br>Vergleich IV | 1:4<br>88<br>1 | 3,5 | 3,5 | 5 | 0 | 0 | 15 |
| 16<br>Vergleich V | 1,5:8,5<br>88<br>1 | 3,5 | 3,5 | 5 | 0 | 0 | 15 |

[1] Druckfarbe wurde durch Mischen der a bzw. b enthaltenden Druckfarben hergestellt

*Tabelle IIb*
*Prüfungsergebnisse*

| Beispiel | Viskosität DIN-Becher (s) | Farbstärke FAE | Glanz | | Dispergier-barkeit |
|---|---|---|---|---|---|
| | | | PE-Folie | AL-Folie | |
| 13<br>Vergleich II | 27<br>22 | 9<br>100 | 101,8<br>98,1 | 125,9<br>124,0 | +5<br>−1 |
| 14<br>Vergleich III | 47<br>20 | 89<br>100 | 101,8<br>87,0 | 120,3<br>100 | 0<br>−4 |
| 15<br>Vergleich IV | 46<br>16 | 89<br>100 | 90,7<br>79,6 | 100<br>87 | −2<br>−6 |
| 16<br>Vergleich V | 35<br>16 | 97<br>100 | 96,2<br>79,6 | 98,1<br>85,1 | −2<br>−6 |

*Tabelle IIIa*

| Beispiel | Pigment a:b = 1:2 (T.) | Komponente | | | | | Mahl-dauer (h) |
|---|---|---|---|---|---|---|---|
| | | c (T.) | d (T.) | e (T.) | f (T.) | g (T.) | |
| 17 | 83 | 3,5 | 3,5 | 5 | 5 | 0 | 15 |
| 18 | 83,5 | 3,5 | 3,5 | 0 | 0 | 9,5 | 15 |
| 19 | 95 | 0 | 0 | 5 | 0 | 0 | 15 |
| 20 | 90 | 5 | 0 | 5 | 0 | 0 | 15 |
| 21 | 90 | 0 | 5 | 5 | 0 | 0 | 15 |
| 22 | 95 | 5 | 0 | 0 | 0 | 0 | 15 |
| 23 | 88 | 3,5 | 3,5 | 5 | 0 | 0 | 15 |
| 24 | 100 | 0 | 0 | 0 | 0 | 0 | 15 |
| Vergleich VI | [1] | | | | | | |

[1] s. Tabelle IIa

*Tabelle IIIb*
*Prüfungsergebnisse*

| Beispiel | Viskosität DIN-Becher (s) | Farbstärke FAE | Glanz | | Dispergier-barkeit |
|---|---|---|---|---|---|
| | | | PE-Folie | AL-Folie | |
| 17 | 22 | 80 | 103,7 | 125,9 | −1 |
| 18 | 36 | 83 | 101,8 | 114,8 | −1 |
| 19 | 17 | 93 | 98,1 | 112,9 | +1 |
| 20 | 19 | 100 | 101,8 | 118,5 | +1 |
| 21 | 26 | 83 | 101,8 | 120,3 | +2 |
| 22 | 17 | 100 | 85,1 | 92,5 | 0 |
| 23 | 18 | 78 | 100,0 | 111,1 | +3 |
| 24 | 17 | 100 | 74 | 83,3 | −4 |
| Vergleich VI | 21 | 100 | 75,9 | 87,0 | −6 |

*Tabelle IV*

| Beispiel | Komponente c | α Viskosität (s) | β Farbstärke FAE | γ Glanz PE-Folie | γ Glanz AL-Folie | δ Disper-gier-barkeit |
|---|---|---|---|---|---|---|
| 25 | 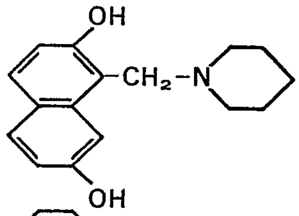 | 30 | 83 | 101,8 | 118,5 | −1 |
| 26 | 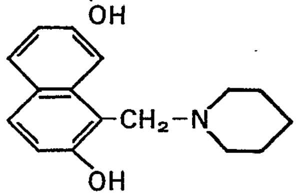 | 29 | 85 | 101,8 | 122,0 | 0 |
| 27 | 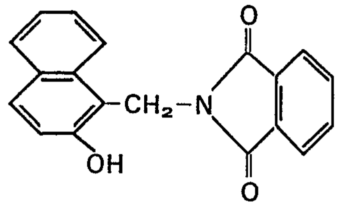 | 30 | 83 | 103,7 | 120,5 | −3 |
| 28 | 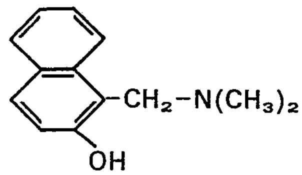 | 31 | 91 | 101,8 | 125,9 | −2 |
| 29 | 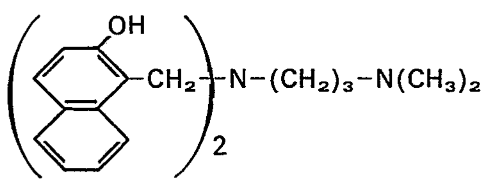 | 32 | 85 | 101,8 | 120,3 | −1 |
| 30 | 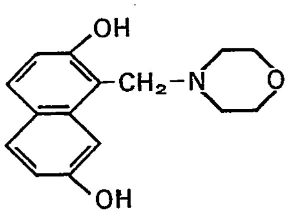 | 39 | 83 | 103,7 | 124,0 | −1 |
| 31 | 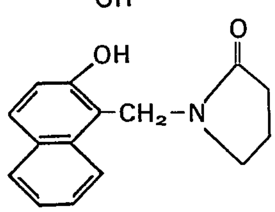 | 24 | 83 | 103,7 | 129,6 | −2 |
| 32 | 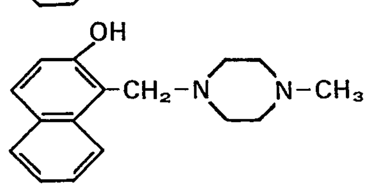 | 40 | 81 | 101,8 | 125,9 | −2 |
| Vergleich VI | O | 21 | 100 | 75,9 | 87,0 | −6 |

*Tabelle IV* (Fortsetzung)

| Beispiel | Komponente c 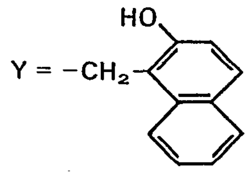 | α Viskosität (s) | β Farbstärke FAE | γ Glanz PE-Folie | γ Glanz AL-Folie | δ Dispergierbarkeit |
|---|---|---|---|---|---|---|
| 33 | $Y-NH-CH_2-CH_2-NH-Y$ | 23 | 83 | 103,7 | 124,0 | 0 |
| 34 | $Y-N[(CH_2)_3N-(Y)_2]_2$ | 26 | 83 | 103,7 | 125,9 | −1 |
| 35 | 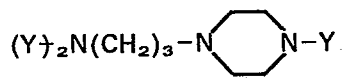 | 32 | 83 | 103,7 | 125,9 | −2 |
| 36 | 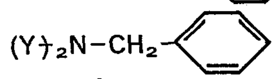 | 27 | 85 | 103,7 | 127,7 | −3 |
| 37 | 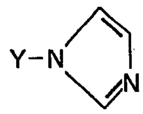 | 26 | 85 | 103,7 | 133,3 | −1 |
| 38 | $Y-N[(CH_2)_2-OCH_3]_2$ | 25 | 85 | 103,7 | 125,9 | −1 |
| 39 | 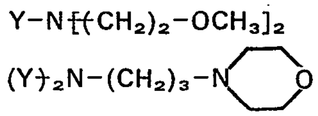 | 35 | 83 | 101,8 | 118,5 | −1 |
| 40 | $(Y)_2N-CH_2-CH_2-OH$ | 26 | 83 | 103,7 | 98,1 | −2 |
| 41 | 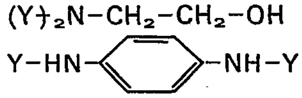 | 24 | 83 | 103,7 | 120,3 | 0 |
| Vergleich VI | 0 | 21 | 100 | 75,9 | 87,0 | −6 |

*Beispiel 42*

a) 83 Teile eines Gemisches aus Rohkupferphthalocyanin und Miloriblau (2:1 Teile) wurden zusammen mit 3,5 Teilen 1-(Morpholinomethylen)-2-hydroxynaphthalin (Komponente c), 3,5 Teilen des Umsetzungsproduktes von 1,5-Naphthylendiisocyanat und 3-(2'-Ethylhexoxy)-propylamin (1:2 mol) (Komponente d) und 10 Teilen eines Gemisches aus Dodecylbenzolsulfonsäure und $CuPc(CH_2NHC_2H_5)_{2,3}$ (1:1 Teile) (Komponente f) in der Kugelmühle 15 h gemahlen.

b) Mit der Zubereitung a wurden nach C. 2. bzw. C. 3. und D. 1. bzw. D. 2. Volltonlackierungen und Weissverschnitte hergestellt.

Die Volltonlackierung ist wesentlich lasierender als eine mit einem Lackpigment auf der Basis Kupferphthalocyanin hergestellte Lackierung. Für die Weissverschnittfärbung wurden im Vergleich zum Weissverschnitt auf der Basis des vorstehend genannten Lackpigments folgende Ergebnisse erhalten:

| | Weissverschnitt FAE | Weissverschnitt DH | Weissverschnitt Rub-out | Vollton Lasur |
|---|---|---|---|---|
| a) | 89 | 57 | 95 | wesentlich lasierender als Vergleich |
| Lackpigment CuPc (Vgl.) | 100 | 62 | 95 | |

Der Farbton der Weissverschnittfärbungen mit a ist deutlich röter als der Vergleich.

## Patentansprüche

1. Zubereitungen enthaltend

a) ein feinteiliges Kupferphthalocyanin, das gegebenenfalls bis zu 2 Chloratome im Molekül enthält, und

b) ein Eisenhexacyanoferrat(III)pigment, wobei die Zubereitung durch intensives Mahlen eines Gemisches aus Kupferphthalocyanin und den Komponenten (b) erhalten wird.

2. Zubereitungen gemäss Anspruch 1, dadurch gekennzeichnet, dass das Gewichtsverhältnis von (a):(b) 1,5:8,5 bis 9:1 beträgt.

3. Zubereitungen gemäss einem der Ansprüche 1 oder 2, dadurch gekennzeichnet, dass diese zusätzlich noch enthält

c) mindestens eine Verbindung, die durch Mannich-Kondensation aus 2-Hydroxynaphthalin, das gegebenenfalls noch eine oder zwei weitere β-ständige Hydroxygruppen trägt, Formaldehyd und primären oder sekundären aliphatischen, cycloaliphatischen oder aromatischen Mono-, Di-, Tri- oder Polyaminen oder 5- oder 6gliedrigen gesättigten heterocyclischen Verbindungen, die eine >NH-Gruppe als Ringglied aufweisen, erhalten wird und die 1 bis 6 β-Hydroxynaphthylgruppen enthält.

d) mindestens eine Verbindung der Formel

$$K\text{-(-}NHCO-NH-R)_2$$

in der K ein 1,5-Naphthylen- oder ein 4,4'-Diphenylenmethan und R $C_{12}$- bis $C_{18}$-Alkyl, $C_{12}$- bis $C_{18}$-Alkenyl oder 3-($C_8$- bis $C_{18}$-Alkoxy)propyl bedeuten,

e) mindestens eine $C_6$- bis $C_{18}$-Alkylbenzolsulfonsäure, die gegebenenfalls im Phenylkern eine Hydroxylgruppe trägt, oder

f) ein Gemisch aus (e) und einem basischen Kupferphthalocyanin der Formel

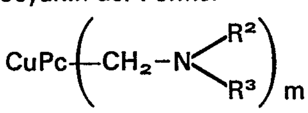

in der CuPc ein m-wertiger Rest des Kupferphthalocyanins, $R^2$ und $R^3$ unabhängig voneinander Wasserstoff oder $C_1$- bis $C_8$-Alkyl und m 1, 2, 3 oder 4 bedeuten und wobei das Verhältnis von (e) zu basischem Kupferphthalocyanin 0,8:1 bis 1:0,8 Gew.-Teile beträgt,

g) mindestens ein Salz, das durch Umsetzen von (e) mit dem unter (f) angegebenen basischen Kupferphthalocyanin erhalten wird,

oder ein Gemisch aus zwei oder mehreren der unter (c), (d), (e), (f) und (g) genannten Komponenten, wobei – bezogen auf (a+b) – der Anteil an (c), (d) und (e) je bis zu 7 Gew.-% und der an (f) oder (g) bis zu 15 Gew.-% betragen kann, wobei die Summe (c+d+e+f+g) maximal 25 Gew.-% beträgt.

4. Zubereitung gemäss einem der Ansprüche 1 oder 2, dadurch gekennzeichnet, dass diese neben (a) und (b) mindestens noch einen der Zusätze enthalten

c) der Formel $R^4-CH_2-X$, in der

$R^4$ für 2-Hydroxynaphthyl-1 oder 2,7-Dihydroxynaphthyl-1, und

X für einen Rest der Formel

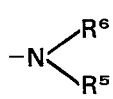 oder 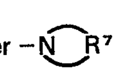

$R^6$ und $R^5$ je für gleiches oder verschiedenes $C_1$- bis $C_5$-Alkyl, $C_1$- bis $C_8$-Alkoxy-$C_2$- oder $C_3$-alkyl, Alkoxyalkoxy-$C_2$- oder $C_3$- alkyl mit 3 bis 11 C-Atomen im Alkoxyalkoxyrest, Hydroxy-$C_2$- oder $C_3$-alkyl, N,N-Di-$C_1$- bis $C_4$-alkylamino-$C_2$- oder $C_3$-alkyl, Phenyl-$C_1$- bis $C_4$-alkyl, 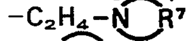 oder 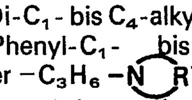,

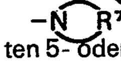 für einen gesättigten oder ungesättigten 5- oder 6gliedrigen heterocyclischen Ring, der gegebenenfalls –O– oder

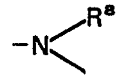

und/oder eine oder 2 >C=O-Gruppen als Ringglieder enthält

$R^8$ für $C_1$- bis $C_4$-Alkyl, oder

$R^5$ für einen Rest der Formel $-CH_2-R^4$, und

$R^6$ für eine Gruppe der Formel

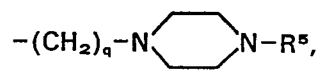, 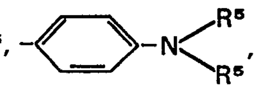, 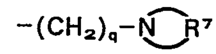

oder

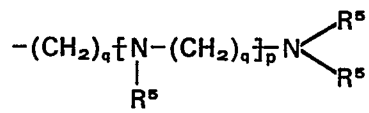

q für 2 oder 3, und

p für 0, 1 oder 2 stehen;

d) der Formel $K\text{-(}NHCO-NH-R)_2$, in der K für 1,5-Naphthylen und R für $C_{13}$- bis $C_{18}$-Alkyl, $C_{13}$- bis $C_{18}$-Alkenyl, $C_8$- bis $C_{18}$-Alkoxypropyl oder $-(CH_2)_3O-(C_2H_4O)_nR^1$; $R^1$ für Ethyl, Propyl, Butyl oder Phenyl und n für 2 oder 3 stehen;

e) $C_6$- bis $C_{18}$-Alkylbenzolsulfonsäuren;

f) ein Gemisch von (e) mit einer Verbindung der Formel

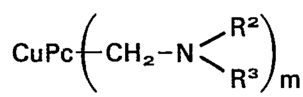

in der CuPc für einen m-wertigen Kupferphthalocyaninrest, mindestens einer der Reste $R^2$ oder $R^3$ für Ethyl, Propyl oder Butyl und m im Mittel für 2,5 bis 4 stehen, wobei das Verhältnis (e) zu dem basischen CuPc 0,8:1 bis 1:0,8 beträgt,

g) ein Salz der unter (f) genannten Verbindungen,

wobei der Anteil an (c), (d) und (e) je bis zu 7 Gew.-% und der an (f) oder (g) bis zu 15 Gew.-%, bezogen auf (a+b), beträgt und wobei die Summe der Anteile an (c+d+e+f+g) maximal 25 Gew.-%, bezogen auf (a+b), betragen darf.

5. Zubereitung gemäss einem der Ansprüche 3 oder 4, dadurch gekennzeichnet, dass die Zubereitungen neben (a+b) noch (c) und (d); noch (d) und (e); noch (c), (d) und (e); noch (c), (d) und (f) oder noch (c), (d) und (g) enthalten.

6. Zubereitung gemäss einem der Ansprüche 3 oder 4, dadurch gekennzeichnet, dass diese aus (a), (b), (c), (d) und (e) besteht, wobei der Anteil (c+d+e) 4 bis 21 Gew.-%, bezogen auf (a+b), beträgt.

7. Verwendung der Zubereitungen gemäss den Ansprüchen 1 bis 6 zum Färben von Druck- und Lackfarben.

## Claims

1. A formulation containing

(*a*) a finely divided copper phthalocyanine which is unsubstituted or monosubstituted or disubstituted by chlorine, and

(*b*) an iron hexacyanoferrate(III)pigment, which formulation is obtained by thoroughly milling a mixture of the copper phthalocyanine and (*b*).

2. A formulation as claimed in Claim 1, wherein the weight ratio of (*a*) to (*b*) is from 1.5:8.5 to 9:1.

3. A formulation as claimed in Claim 1 or 2, which additionally contains

(*c*) one or more compounds which are obtained by Mannich condensation of 2-hydroxynaphthalene which may or may not contain 1 or 2 further β-hydroxy groups, formaldehyde and a primary or secondary aliphatic, cycloaliphatic or aromatic monoamine, diamine, triamine or polyamine or a 5-membered or 6-membered saturated heterocyclic compound containing an >NH group as a ring member, and possess from 1 to 6 β-hydroxynaphthyl groups,

(*d*) one or more compounds of the formula

$$K\text{-}(NHCO-NH-R)_2$$

where K is 1,5-naphthylene or 4,4'-diphenylenemethane and R is $C_{12}$-$C_{18}$-alkyl, $C_{12}$-$C_{18}$-alkenyl or 3-($C_8$-$C_{18}$-alkoxy)propyl,

(*e*) one or more $C_6$-$C_{18}$-alkylbenzenesulfonic acids which may or may not possess a hydroxyl group in the phenyl nucleus, or

(*f*) a mixture of (*e*) with a basic copper phthalocyanine of the formula

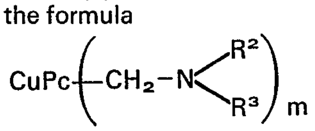

where CuPc is an m-valent radial of copper phthalocyanine, $R^2$ and $R^3$ independently of one another are hydrogen or $C_1$-$C_8$-alkyl, and m is 1, 2, 3 or 4, the weight ratio of (*e*) to basic copper phthalocyanine being from 0.8:1 to 1:0.8, and

(*g*) one or more salts obtained by reacting (*e*) with the basic copper phthalocyanine specified under (*f*), or a mixture of two or more of the components specified under (*c*), (*d*), (*e*), (*f*) and (*g*), and wherein the amounts of each of the components (*c*), (*d*) and (*e*) are not more than 7% by weight, the amount of (*f*) or (*g*) is not more than 15% by weight, and the sum (*c*+*d*+*e*+*f*+*g*) is at most 25% by weight, the percentages being based on (*a*+*b*).

4. A formulation as claimed in Claim 1 or 2, which, in addition to (*a*) and (*b*), contains at least one of the following:

(*c*) one or more compounds of the formula

$$R^4-CH_2-X$$

where $R^4$ is 2-hydroxynaphth-1-yl or 2,7-dihydroxynaphth-1-yl and X is a radical of the formula

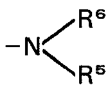 or 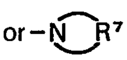

where $R^5$ and $R^6$ are identical or different and are each $C_1$-$C_5$-alkyl, $C_1$-$C_8$-alkoxy-$C_2$- or -$C_3$-alkyl, alkoxyalkoxy-$C_2$- or -$C_3$-alkyl where alkoxyalkoxy is of 3 to 11 carbon atoms, hydroxy-$C_2$- or -$C_3$-alkyl, N,N-di-$C_1$-$C_4$-alkylamino-$C_2$- or -$C_3$-alkyl, phenyl-$C_1$-$C_4$-alkyl, $-C_2H_4-$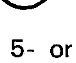 or $-C_3H_6-$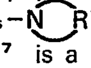, and

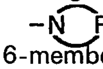 is a saturated or unsaturated 5- or 6-membered heterocyclic ring which may or may not contain

$-O-$ or 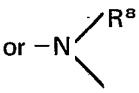

and/or one or two >C=O groups as ring members, $R^8$ being $C_1$-$C_4$-alkyl, or $R^5$ is a radical of the formula $-CH_2-R^4$ and $R^6$ is a group of the formula

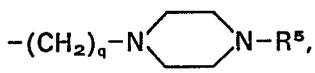 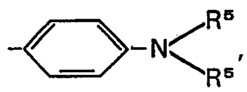,

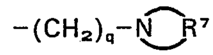

or

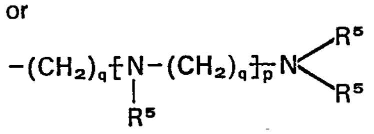

where q is 2 or 3 and p is 0, 1 or 2,

(*d*) one or more compounds of the formula

$$K\text{-}(NHCO-NH-R)_2$$

where K is 1,5-naphthylene, R is $C_{13}$-$C_{18}$-alkyl, $C_{13}$-$C_{18}$-alkenyl, $C_8$-$C_{18}$-alkoxypropyl or $-(CH_2)_3O-(C_2H_4O)_nR^1$, where $R^1$ is ethyl, propyl, butyl or phenyl, and n is 2 or 3,

(*e*) one or more $C_6$-$C_{18}$-alkylbenzenesulfonic acids,

(*f*) a mixture of (*e*) with a compound of the formula

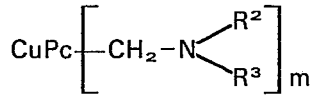

where CuPc is an m-valent radical of the copper phthalocyanine, one or both of the groups $R^2$ and $R^3$ are ethyl, propyl or butyl and m is on average from 2.5 to 4, the ratio of (*e*) to the basic CuPc being from 0.8:1 to 1:0.8, and

(*g*) one or more salts of the compounds specified under (*f*),

and wherein the amounts of each of the components (*c*), (*d*) and (*e*) are not more than 7% by weight, the amount of (*f*) or (*g*) is not more than 15% by weight, and the sum (*c*+*d*+*e*+*f*+*g*) is at most 25% by weight, the percentages being based on (*a*+*b*).

5. A formulation as claimed in Claim 3 or 4, which, in addition to (*a*) and (*b*), contains (*c*) and (*d*); (*d*) and (*e*); (*c*), (*d*) and (*e*); (*c*), (*d*) and (*f*); or (*c*), (*d*) and (*g*).

6. A formulation as claimed in Claim 3 or 4, which comprises (*a*), (*b*), (*c*), (*d*) and (*e*), the

amount of (*c*+*d*+*e*) being from 4 to 21% by weight, based on (*a*+*b*).

7. The use of a formulation as claimed in Claims 1 to 6 for coloring printing inks and surface coatings.

**Revendications**

1. Préparations contenant

a) une phtalocyanine de cuivre finement divisée qui, le cas échéant, contient jusqu'à 2 atomes de chlore dans la molécule, et

b) un pigment d'hexacyanoferrate(III) de fer, caractérisées en ce qu'elles sont obtenues par broyage intense d'un mélange de phtalocyanine de cuivre et de (b).

2. Préparations selon la revendication 1, caractérisées en ce que le rapport en poids de (a) à (b) est compris entre 1,5:8,5 et 9:1.

3. Préparations selon l'une des revendications 1 ou 2, caractérisées en ce qu'en plus, elles contiennent encore

c) au moins un composé qui est obtenu par condensation de Mannich à partir d'un 2-hydroxynaphtalène qui, le cas échéant, comporte encore un ou deux autres groupes hydroxy en position β, de formaldéhyde et de mono-, di-, tri- ou polyamines aliphatiques, cycloaliphatiques ou aromatiques primaires ou secondaires ou de composés hétérocycliques saturés penta- ou hexagonaux qui comportent un groupe >NH en tant que terme cyclique, composé qui contient 1 à 6 groupes β-hydroxynaphtyle,

d) au moins un composé de formule

$$K\{NHCO-NH-R)_2$$

dans laquelle K représente un radical 1,5-naphtylène ou 4,4'-diphénylèneméthane et R représente un alcoyle en $C_{12}$ à $C_{18}$, un alcényle en $C_{12}$ à $C_{18}$ ou un 3-alcoxy($C_{8-18}$)-propyle,

e) au moins un acide alcoyl($C_{6-18}$)-benzènesulfonique qui, le cas échéant, comporte un groupe hydroxyle dans le noyau phénylique, ou

f) un mélange de (e) et d'une phtalocyanine de cuivre basique de formule

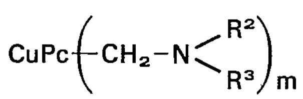

dans laquelle CuPc est un radical à m valences de la phtalocyanine de cuivre, $R^2$ et $R^3$ représentent, indépendamment l'un de l'autre, un hydrogène ou un alcoyle en $C_1$ à $C_8$ et m est égal à 1, 2, 3 ou 4, le rapport de (e) à la phtalocyanine de cuivre basique se situant entre 0,8:1 et 1:0,8 partie, et

g) au moins un sel qui est obtenu par la mise en réaction de (e) avec la phtalocyanine de cuivre basique définie en (f),

ou un mélange de deux ou de plusieurs des constituants cités en (c), (d), (e), (f) et (g), la proportion – par rapport à (a+b) – de chacun des constituants (c), (d) et (e) pouvant aller jusqu'à 7% en poids et celle des constituents (f) ou (g) jusqu'à 15% en poids, la somme (c+d+e+f) s'élevant au maximum à 25% en poids.

4. Préparation selon l'une des revendications 1 ou 2, caractérisée en ce qu'elle contient, outre (a) et (b), au moins l'un des additifs suivants

c) de formule

$$R^4-CH_2-X$$

dans laquelle

$R^4$ est mis pour un 2-hydroxynaphtyle-1 ou un 2,7-dihydroxynaphtyle-1, et

X pour un radical de formule

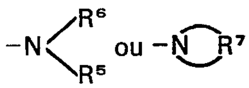

$R^6$ et $R^5$, semblables ou différents, représentant chacun un alcoyle en $C_1$ à $C_6$, un alcoxy($C_{1-8}$)-alcoyle($C_{2-3}$), un alcoxyalcoxyalcoyle en $C_2$ ou $C_3$ avec 3 à 11 atomes de C dans le radical alcoxyalcoxy, un hydroxyalcoyle en $C_2$ ou $C_3$, un N,N-dialcoyl($C_{2-3}$)-aminoalcoyle($C_{2-3}$), un phénylalcoyle en $C_1$ à $C_4$, $-C_2H_4-$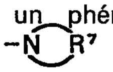 ou $-C_3H_6-$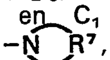,

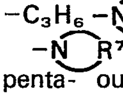 représentant un noyau hétérocyclique penta- ou hexagonal saturé ou insaturé qui contient éventuellement, en tant que terme cyclique,

−O− or 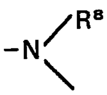

et/ou un ou deux groupes >C=O,

$R^8$ étant mis pour un alcoyle en $C_1$ à $C_4$, ou bien $R^5$ représentant un radical de formule $-CH_2-R^4$, et

$R^6$ représentant un groupe de formule

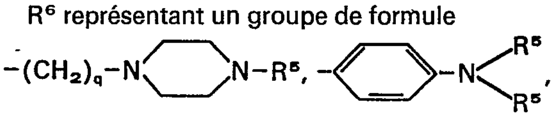

ou 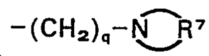

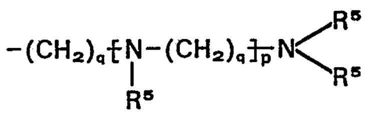

q étant égal à 2 ou 3, et

p à 0, 1 ou 2;

d) de formule

$$K\{NHCO-NH-R)_2$$

dans laquelle

K est mis pour un 1,5-naphtylène,

R pour un alcoyle en $C_{13}$ à $C_{18}$, un alcényle en $C_{13}$ à $C_{18}$, un alcoxy($C_{8-18}$)-propyle ou $-(CH_2)_3O-(C_2H_4O)_nR^1$ ($R^1$ étant un éthyle, un propyle, un butyle ou un phényle), et

n est égal à 2 ou 3;

e) des acides alcoyl($C_{6-18}$)-benzènesulfoniques;

f) un mélange de (e) avec un composé de formule

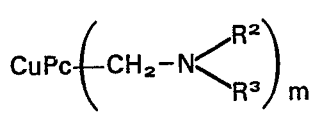

dans laquelle CuPc est mis pour un radical phtalocyanine à m valences, au moins l'un des radicaux $R^2$ et $R^3$ pour un éthyle, un propyle ou un butyle et m est égal en moyenne à 2,5 à 4, le rapport de (e) à la CuPc basique étant compris entre 0,8:1 et 1:0,8;

(g) un sel des composés mentionnés en (f); la proportion de chacun des constituants (c), (d) et (e) pouvant aller jusqu'à 7% en poids et celle de (f) ou de (g) jusqu'à 15% en poids, la somme des parts de (c+d+e+f+g) pouvant s'élever au maximum à 25% en poids.

5. Préparation selon l'une des revendications 3 ou 4, caractérisée en ce qu'outre (a+b), elle contient encore (c) et (d); (d) et (e); (c), (d) et (e); (c), (d) et (f) ou (c), (d) et (g).

6. Préparation selon l'une des revendications 3 ou 4, caractérisée en ce qu'elle se compose de (a), (b), (c), (d) et (e), la proportion de (c+d+e) étant comprise entre 4 et 21% en poids par rapport à (a+b).

7. Utilisation des préparations selon l'une quelconque des revendications 1 à 6 pour la coloration d'encres d'imprimerie et de vernis-émail.